# EUROPEAN PATENT APPLICATION

(11) **EP 1 271 449 A1**
(43) Date of publication of application: **02.01.2003**
(21) Application number: 02445037.1
(22) Date of filing: 18.03.2002
(51) Int. Cl.: G09B 5/14, G09B 5/12

(54) **A control system for achieving quality ensured competence development**

(30) Priority: 28.06.2001 SE 0102329
(71) Applicant: Mapas Syd AB, 163 53 Spanga (SE)
(72) Inventor: Krantz, Anders, 802 67 Gävle (SE); Bjällas, Rolf, 175 68 Järfälla (SE)
(74) Representative: Karlsson, Leif Karl Gunnar

(57) **Abstract**

The present invention relates to a control system (10) for achieving quality ensured competence development. The control system (10) is connected to a distributed computer network (12). The control system (10) includes a first memory device (14) which is connected to the distributed computer network (12) and which is operable in storing all course sections for different courses and an ideal time for each course section. The control system (10) also includes a second memory device (16) which is connected to the distributed computer network (12) and which is operable in storing all study material affiliated with said course sections. The control system (10) also includes a third memory device (18) which is connected to the distributor computer network (12) and operable in storing individual-adapted course plans. The control system (10) also includes a control device (20) which is connected to the distributed computer network (12) and which is operable in calculating and indicating a planned completion date for each individual's course plan, with the aid of said ideal time for different course sections and the time spent by the individual on different course sections. The control system (10) also includes a fourth memory device (22) which is connected to the distributed computer network (12) and which is operable to store those course plans and course sections that have been completed by each respective individual.

## Description

### FIELD OF THE INVENTION

According to a first aspect the present invention relates to a control system for achieving quality ensured competence development.

According to a second aspect the present invention relates to a method of achieving quality ensured competence development.

According to a third aspect the present invention relates to a computer program product for achieving quality ensured competence development.

### BACKGROUND OF THE INVENTION

Development in the teaching and learning educational field has progressed very slowly. Pupils are still taught in traditional ways, to a very large extent.

Firstly, it is difficult to obtain an overall picture of existing educational processes and what they involve.

Secondly, there is at present no way of ensuring the quality of education/competence development. How shall the interface/interactivity and quality between pupils and teachers be ensured, regardless of whether the educational process/competence development takes place online or offline?

Document U.S. 5,267,865 describes a pedagogic instrument which creates the possibility of creating a given degree of interactivity between pupil and teacher on the basis of a defined teaching plan. The educational process or section of the course taken is aided and supported by sound and pictures, for example. This document deals solely with the teaching section in the absence of logic. On the other hand, the document fails to touch upon the full competence development process.

Document U.S. 6,157,808 describes a so-called Teacher's Platform, where the object has been to create different modules within the area of competence development with the intention of creating a communicative forum. There is no well-reasoned logic that supports the so-called competence development process, but that the functions, figuratively speaking, constitute a leaf diagram in which the individual leaves are described in the document as modules, in the absence of any coherent logic process.

The document U.S. 6,157,808 includes essentially a conceived content of so-called commercially established certificates. In principle, the function provides a possibility of creating a so-called gap analysis concerning the competence of an employee in relation to certificate requirements. This concerns primarily a so-called Human Resource tool which enables a company to keep track of the employee's competence.

### SUMMARY OF THE INVENTION

An object of the present invention is to solve the aforementioned problems. Another object of the present invention is to achieve individual adaptation of such competence development.

According to a first aspect of the present invention there is provided a control system for achieving quality ensured competence development. The control system is connected to a distributed computer network. The control system includes at least one first memory device connected to said distributed computer network and operable to store all sections of different courses and an ideal time for each course section. The control system also includes at least one second memory device connected to said distributed computer network and operable to store all study material belonging to said course section. The control system also includes at least one third memory device connected to said distributed computer network and operable to store individual adapted course plans. The control system also includes at least one control device connected to said distributed computer network and operable to calculate and indicate planned completion dates for each individual course plan, with the aid of said ideal time for different course sections and the time taken by each individual to complete different course sections. The control system also includes at least one fourth memory device connected to said distributed computer network and operable to store the course plans for each individual and completed course sections. This control system provides a technical aid for achieving quality ensured competence development. In addition, there is obtained a technical aid for achieving individual-adapted competence development. The control system also affords the additional advantage of being completely independent of the subject content, teaching platform or type of document chosen.

Another advantage in this regard is that each individual has access to said control system through the medium of computer devices that can be connected to said distributed computer network, and that the control system also includes at least one recording device operable to record the time spent by each individual in different course sections.

A further advantage is obtained in this regard, when the distributed computer network is comprised of the Internet or a Wide Area Network (WAN).

In this regard, a further advantage is obtained when said at least one third memory device and said at least one fourth memory device consists of at least one first server device, and one said at least one second memory device consists of a second server device.

In this regard, a further advantage is obtained when each computer device includes a reproduction device or display, wherewith different cursors are displayed on said device to indicate different statuses for a course section in respect of a certain individual.

A further advantage is obtained in this regard, when a first cursor indicates that a course section has been completed, a second cursor indicates that a course section is ongoing, and a third cursor indicates that a course section has been commenced but not yet completed.

In this regard, a further advantage is obtained when recording of the time spent in respect of a course section by means of the recording device is commenced and terminated by means of a fourth cursor.

A further advantage is obtained in this regard, when an individual is able to communicate in writing with a teacher, through the medium of a fifth cursor.

In this regard, a further advantage is obtained when access to the control system is obtained via a password and/or security codes.

Another object of the present invention is to provide a method of providing quality ensured competence development with the aid of a control system for achieving quality ensured competence development. The method comprises the steps of
- choosing from a first memory device included in the control system and operable in storing all course sections of different courses and an ideal time for each course section, course sections which create an individual-adapted course plan, and storing said plan in a third memory device included in said control system;
- downloading study material affiliated with said chosen course sections from a second memory device included in the control system and operable to store all study material;
- calculating the planned completion date of said course plan by means of a control device included in said control system, with the aid of said ideal time for different course sections and the time spent by the individual on different course sections; and
- storing said course section in a fourth memory device included in said control system when one or more course sections or course plans have been completed. This method provides an aid for achieving quality ensured competence development. The method also provides an aid for achieving individual adapted competence development. A further advantage afforded by said method is that it is fully independent of the subject content, teaching platform, or type of document chosen.
   A further advantage is obtained in this regard when each individual obtains access to said control system through the medium of a computer device which can be connected to a distributed computer network and which includes a reproduction device or display, wherein the method also comprises the steps of
- displaying on the display a first cursor which indicates that a course section has been completed;
- displaying on the display a second cursor which indicates that a course section is ongoing; and
- displaying on the display a third cursor which indicates that a course section has been commenced but not yet completed.

A further advantage is obtained in this regard, when the control system includes at least one recording device operable to record the time spent by each individual on different course sections, wherein the method includes the further step of
- using a fourth cursor to commence and terminate recording of the time spent in respect of a course section by the recording device.

A further advantage is obtained in this regard when the method also includes the step of
- enabling an individual to communicate in writing with a teacher through the medium of a fifth cursor displayed on the display device.

In this regard, a further advantage is obtained when the distributed computer network is the Internet or a Wide Area Network (WAN).

A further advantage is obtained in this regard, when the method includes the further step of
- subsequent to having revised study material in the second memory device, distributing said revised study material to those individuals that have chosen the course section affiliated with said study material.

In this regard, a further advantage is obtained when access to the control system is obtained by entering a password and/or security codes.

Another object of the present invention is to provide at least one computer program product, which can be loaded directly into the internal memory of at least one digital computer. Said at least one computer program product includes software parts for carrying out the steps of the inventive method. According to the present invention, the computer program product or products provides/provide access of the users to quality ensured competence development and individual adapted competence development.

It will be observed that the term "includes/including" as used in this description is intended to denote the presence of a given characteristic, step or component, without excluding the presence of one or more other characteristic features, parts, steps, components or groups thereof.

### BRIEF DESCRIPTION OF THE DRAWINGS

Embodiments of the invention will now be described with reference to the accompanying drawings, in which
Figure 1 is a block diagram illustrating a control system for achieving quality ensured competence development in accordance with the present invention;
Figure 2 is a flowchart illustrating a method of achieving quality ensured competence development in accordance with the present invention;
Figure 3 is a flowchart, which illustrates another way of describing the method of achieving quality ensured competence development in accordance with the present invention;
Figure 4 is a schematic illustration of the process for validating the competence requirement of pupils;
Figure 5 illustrates schematically the process of competence development in respect of a pupil;
Figure 6 is a schematic illustration of certification concerning a pupil;
Figure 7 is a flowchart illustrating the validation part of the method in achieving quality ensured competence development in accordance with the present invention; and
Figure 8 illustrates schematically a number of computer program products according to the present invention.

### DETAILED DESCRIPTION OF EMBODIMENTS

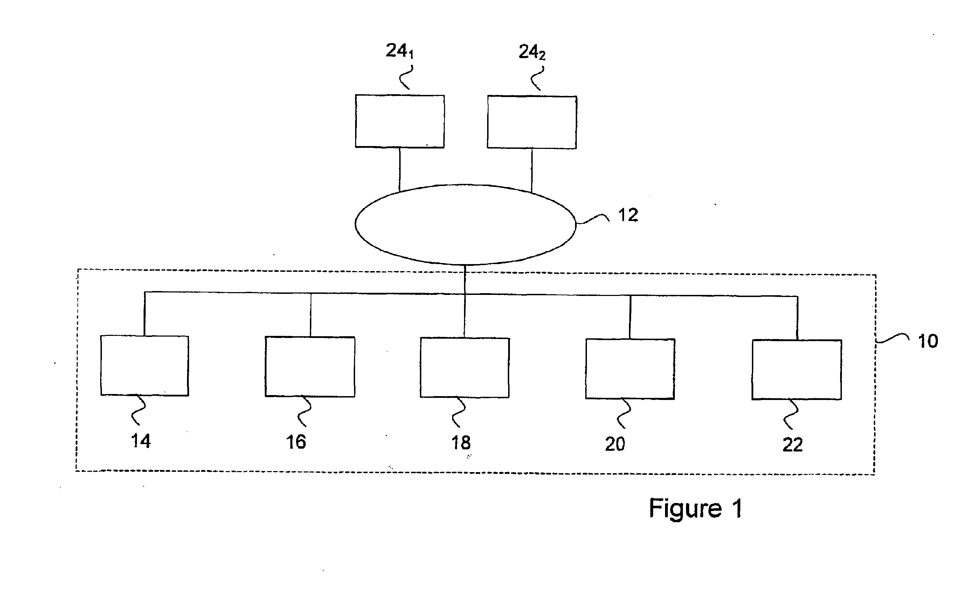

Figure 1 is a block diagram illustrating a control system 10 for achieving quality ensured competence development in accordance with the present invention. The control system 10 is connected to a distributed computer network 12, illustrated schematically in Figure 1. The control system 10 includes at least one first memory device 14 connected to the distributed computer network 12. Only one first memory device 14 is shown in Figure 1, for the sake of simplicity. The first memory device 14 is operable in storing all course sections of different courses and an ideal time for each course section. Thus, it is possible to gather from the first memory device 14 those course sections that are included in a specific course, and also an ideal time for completing each course. The control system 10 also includes at least one second memory device 16 connected to the distributed computer network 12. Only one second memory device 16 is shown in Figure 1, for the sake of simplicity. The second memory device 16 is operable in storing all study material affiliated with said course section. Thus, a pupil can commence his/her studies with the aid of the second memory device 16. The control system 10 also includes at least one third memory device 18 connected to the distributed computer network 12. Only one third memory device 18 is shown in Figure 1, for the sake of simplicity. The third memory device 18 is operable in storing individual-adapted course plans. The control system 10 also includes at least one control device 20 connected to the distributed computer network 12. For the sake of simplicity, only one such control device 20 is shown in Figure 1. The control device 20 is operable in calculating and indicating the planned termination date for each individual course plan, with the aid of said ideal time regarding different course sections and the time spent by each individual on different course sections. The ideal time is obtained from the first memory device 14. The control system 10 also includes at least one fourth memory device 22 connected to the distributed computer network 12. Only one fourth memory device 22 is shown in Figure 1, for the sake of simplicity. The fourth memory device 22 is operable in storing the course plans and course sections completed by each individual. Thus, each pupil has access to a pupil archive including all completed lessons. Also shown in Figure 1 are two computer devices 24₁, 24₂, which can be connected to the distributed computer network 12. These computer devices 24₁, 24₂ provide access of an individual to the control system 10.

It will be observed that the term "course section" used in this document may also signify/include validation tests, diagnostic tests, suitability tests and final tests in, for instance, making assessments, setting grades, and certification.

In a preferred embodiment of the inventive control system 10, said system 10 also includes at least one recording device (not shown) operable in recording the time spent by each individual on different course sections.

The competence development process shall be seen here as the process which, on the basis of the expression lifelong/life span teaching, comprises the following three main processes:
1. Validation and mapping of existing competence, where tests, self-appraisal, evaluations, etc., are included.
2. Educational processes and subject matter in the form of entire educational studies or requirement-adapted modules detached from education suppliers and teaching platforms.
3. Certificates, branch certificates or company-adapted requirements that can be readily revised and kept relevant with time down to the level of the individual.

Tests, examinations, simulations, and so on, are included.
- Personal CV, which is constantly updated, including achieved results or the need for supplementation. Lifelong/life span teaching covers both the time aspect and the breadth of teaching over a lifetime. This can be continuously documented, supplemented and followed-up in the inventive control system. The individual automatically receives an own digital CV or logbook for immediate access and communication.

The distributed computer network 12 may be the Internet 12 or a Wide Area Network 12(WAN).

According to a preferred embodiment of the inventive control system 10, the first memory devices 14, the third memory devices 18 and the fourth memory devices 16 are comprised of a second server (not shown).

According to one preferred embodiment of the control system 10, each computer device 24₁, 24₂ includes a reproduction device or display (not shown), wherein different cursors are presented on the display to indicate different statuses of an individual's course section.

According to a preferred embodiment of the control system 10, a first cursor indicates that a course section is complete, a second cursor indicates that a course section is ongoing, and a third cursor indicates that a course section has been commenced but not yet completed.

The various cursors may be comprised of different icons, which may be of mutually different colours.

According to one preferred embodiment of the control system 10, a fourth cursor is used to start and stop registration of the time spent in respect of a course section the recording device.

According to one preferred embodiment of the control system 10, an individual is able to communicate with a teacher in writing, by means of a fifth cursor.

The aforedescribed control system 10 also enables the management of resource bookings and economy accounts within the competence development sector in the form of, e.g., personnel, localities, educational material, equipment, courses, occupied/unoccupied times, quotations, tenders, invoicing accounts, and so on. This synergy creates conditions for making the competence development sector more efficient, this sector being at present very traditional, where duplication, the poor use of resources, and difficulties in follow-ups are more of a rule than an exception.

The inventive control system 10 is able to develop the value chain in the education sector, where a separate individual can be coupled to the entire chain by education suppliers, product suppliers, and branch organisations. In the control system 10, all interested parties/suppliers constitute the described components/modules that can be readily transferred to an individual competence development plan. For instance, a specific trade union is able to link in its own information document sandwiched with external educational material and use the control system 10 for keeping touch with and following-up the competence development of all members, and to ensure that the information has reached its destination.

The inventive control system 10 is devised for use generally within the entire educational field, regardless of professional field, competence field, subject content or language.

The control system 10 enables an individual to obtain access to material that may lie in different databases anywhere in the world, via links. This is made possible when the control system 10 is connected to the Internet.

Content development and revision is made more efficient, by virtue of the fact that the memory devices of the control system are reached simultaneously from several entities responsible for development/quality, regardless of time and space.

It is possible by means of the control system 10 to fetch information that indicates when a person needs to supplement, e.g., a certificate, either because the time is about to expire/has expired, or because a grade needs to be raised in respect of a section.

Presence/time reports concerning competence development can be readily fetched from the control system 10 and distributed when, for instance, a company desires continuous reports. Alternatively, the reports may be fetched personally.

The control system 10 also enables a search to be made for persons that have a specific competence, e.g. persons that have a competence within 3D CAD.

Because the control system 10 is adapted to a web solution, it is possible, in principle, for an individual to pay a fee for access to study material that has been prepacked in a quality-ensured fashion. This is important, since the development moves towards the individual himself/herself governing his/her own competence development. In Sweden, the political parties are agreed on so-called competence accounts, and Skandia has already introduced competence insurance.

A quality manual that describes precisely how the competence development process is achieved, can be created in a quality-ensured fashion with the use of the control system 10.

The control system 10 makes it possible to co-operate with several content suppliers who are able to supply complete courses or individual modules.

The control system 10 enables a time and a price to be set for each module included. This means that when the individual competence development plan has been completed, the price for the whole of the delivery will also have been paid-up. Additional costs can be readily billed if the time is exceeded. Alternatively, it may be necessary for the individual to place a new order. With regard to the competence account of an individual, a statement can be given as to the amount of money used in the account and the amount of money remaining in said account.

It will be obvious that the control system 10 may include the function of communicating with the teacher via sound and/or pictures (images), for instance via voice mail or a video conference, either online or offline. Moreover, the control system 10 can also be used in a so-called traditional classroom scenario as a strong support for the teacher, who will function more as a coach and supervisor.

The control system 10 also enables the establishment or supplementation of company-specific targets and course sections that may be related to set knowledge proficiency or production targets, which are then broken down to an individual level where a team may be deliberately given different competence development plans which lead towards the company targets.

The web solution will make the control system 10 available via many different media, e.g. so-called thin clients, which do not possess their own intelligence but where a common server solution supplies all contents.

The control system 10 may also provide quick and correct reports, for example reports relating to time, presence (attendance), educational status, preliminary calculations (estimates), costing, deviations and economy.

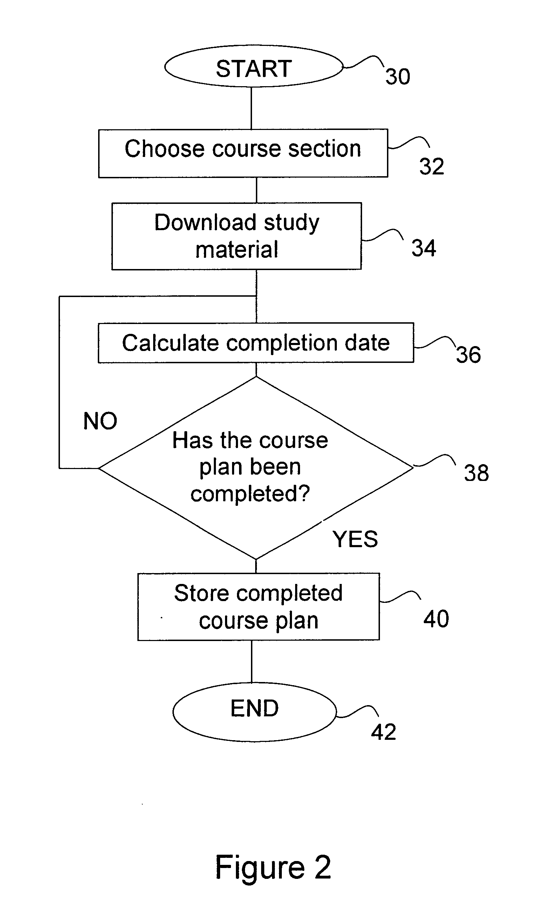

Figure 2 is a flowchart illustrating a method of achieving quality ensured competence development in accordance with the present invention. The method starts at block 30. The method then continues at block 32 with the step of selecting a course section from a first memory device which is included in the control system and which is operable to store all sections of different courses and also an ideal time taken to complete each course section, wherein the course sections chosen form an individual-adapted course plan which is stored in a third memory device in the control system. The method then continues at block 34 with the step in which study material affiliated with the chosen course section from a second memory device included in the control system and operable in storing all study material. The method is then continued at block 36 with the step of calculating and indicating a planned completion date for said course plan with the aid of a control device included in the system and with the aid of said ideal time for different course sections and the time spent by the individual for each course section. In block 38, there is asked the question as to whether one or more course sections or a course plan has/have been completed. If the response to this question is negative, the step according to block 36 is repeated. If the answer to the question is positive, the method continues at block 40 in which the completed course section and/or course sections is/are stored in a fourth memory device included in the control system. The method is terminated at block 42.

According to one preferred embodiment of the inventive method, each individual obtains access to the control system through the medium of a computer device which can be connected to a distributed computer network and which includes a reproduction device or display. The method also includes the steps in which
- a first cursor is displayed on the display device to indicate that a course section is ready;
- a second cursor is shown on the display device to indicate that a course section is ongoing; and
- a third cursor is shown on the display device to indicate that a course section has been commenced but not yet completed.

According to a preferred embodiment of the inventive method, the control system includes at least one recording or registering device which is operable to record the time spent by each individual on difference course sections. The method also includes the steps in which a fourth cursor is used to start and stop recording of the time spent for a course section by the recording device.

According to a preferred embodiment of the inventive method, the method also includes the step of enabling an individual to communicate in writing with a teacher, through the medium of a fifth cursor shown on the display device.

The distributed computer network may consist of the Internet or a Wide Area Network (WAN).

According to a preferred embodiment of the inventive method, the method also includes a step in which when study material has been revised in the second memory device, the revised study material is distributed to those individuals who have chosen the course section affiliated with said study material.

The method according to Figure 2 may, for instance, be carried out with a control system according to Figure 1.

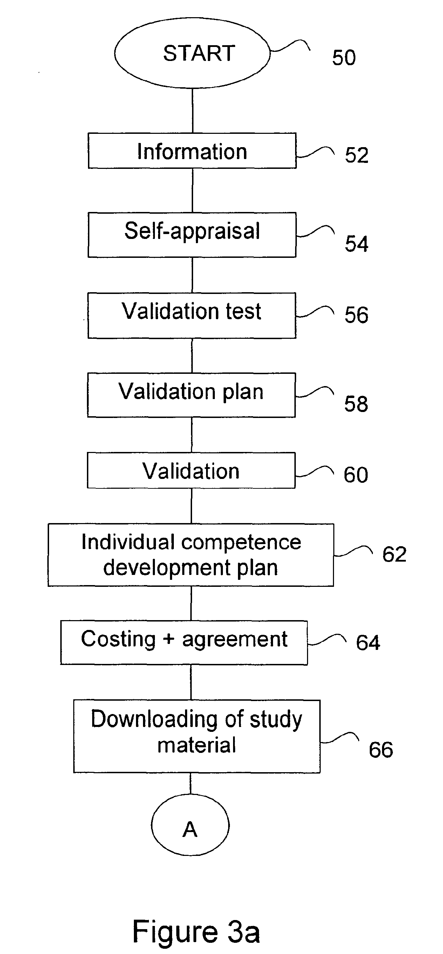

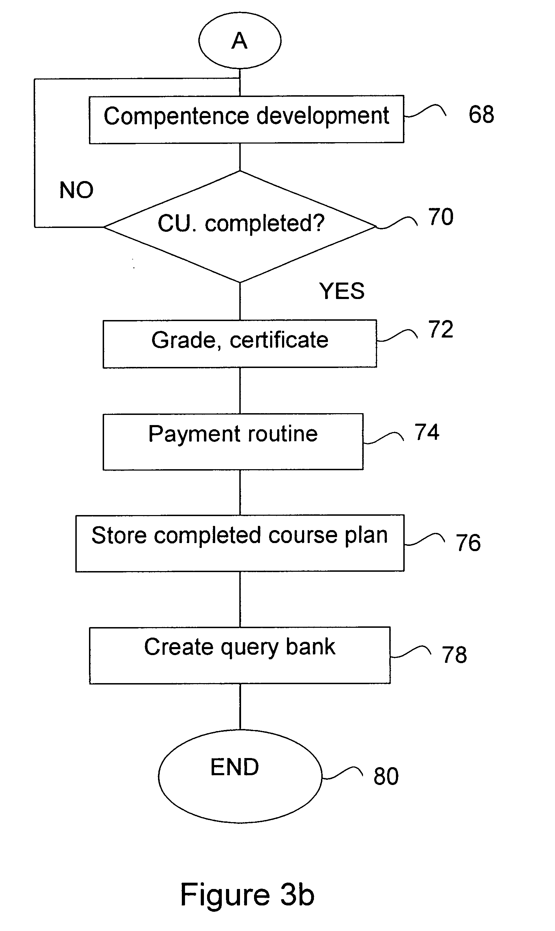

Figure 3 is a flowchart illustrating a method of achieving quality ensured competence development in accordance with the present invention. The method starts at block 50. The method then continues at block 52 with the step of an individual/student fetching information directly from the Internet for example, or in consultation with a supervisor. The method then continues at block 54 with the step in which the individual/student makes a self-appraisal of his/her competence directly on, e.g., the Internet and in consultation with a supervisor either online or offline. The method then continues at block 58 with the step in which there is established a validation plan in consultation with a supervisor either online or offline. The method then continues at block 60 with the step in which validation of theoretical competence, professional competence and possibly co-worker competence is carried out directly on, e.g., the Internet and in consultation with a supervisor, either online or offline. The method then continues at block 62 with the step in which an individual competence development plan is set-up against a target and with a starting point from the validation result directly on, e.g., the Internet and in consultation with a supervisor, either online or offline. The method then continues at block 64 with the step in which the time and cost involved are calculated and a business confirmation/agreement is finalised directly on, e.g., the Internet or physically. The method then continues at block 66 with the step in which an individual competence development plan inclusive of digital study material is downloaded directly on the Internet. The method then continues at block 68 with the step in which competence development is carried out directly on the Internet in accordance with an established competence development plan and with access to resources and support according to the business agreement/contract. The method is then continued at block 70 with the step in which the question is asked as to whether the competence development is complete in accordance with the goal that has been set. If the answer is in the negative, the step according to block 68 is repeated. If, on the other hand, the answer is positive, the method is continued at block 72 in a step in which costs are calculated and reports and printouts of, e.g., grades and certificates are made directly on the Internet. The method then continues at block 74 with the step in which payment routines are carried out, i.e. payment obtained directly over the Internet or through the medium of invoices. The method then continues at block 76 with the step in which the finalised course plan is stored. The method then continues at block 78 with the step in which questions asked and answered are documented in a database as a query bank. The method is terminated at block 80.

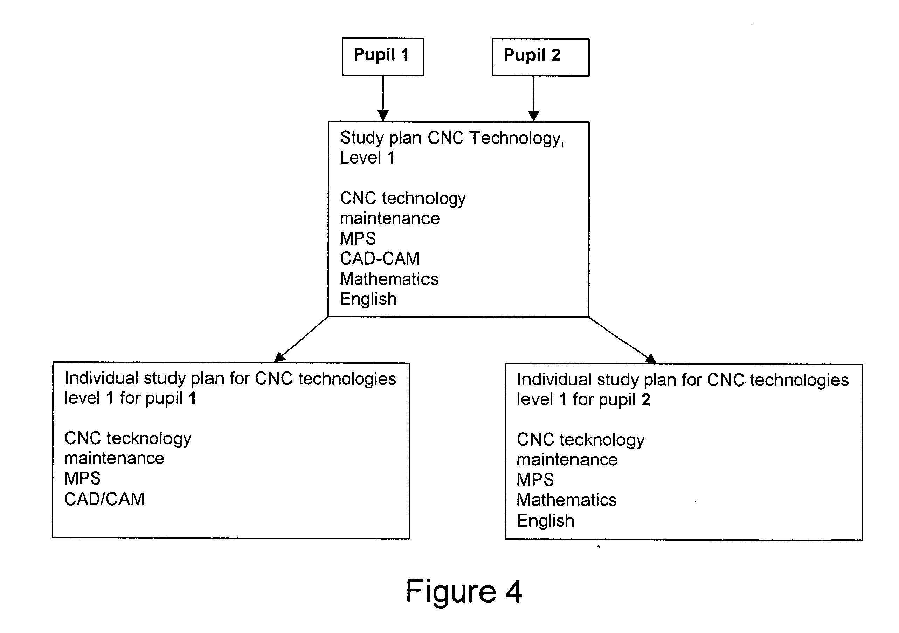

Figure 4 is a schematic illustration of the process for validating pupil competence requirements. In the illustrated case, two pupils, pupil 1 and pupil 2, have the goal of achieving competence corresponding to the course CNC technology, level 1. Figure 4 shows the course sections included in the study plan for CNC technology, level 1. Both pupils are given, e.g., a validation test to establish their previous knowledge. This validation test gives rise to individual study plans for the two different pupils. In the Figure 4 example, it is apparent that pupil 1 needs to read four different course sections, whereas pupil 2 needs to read five different course sections.

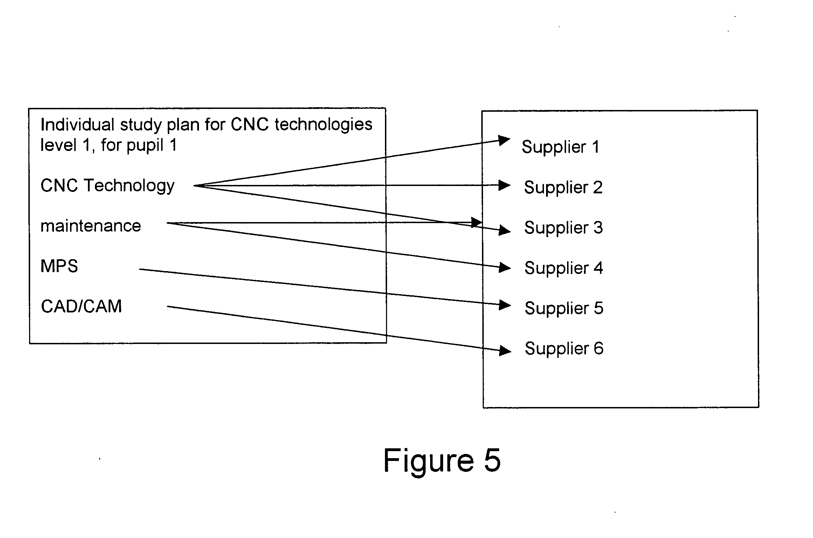

Figure 5 illustrates schematically the competence development process for pupil 1 in Figure 4. As evident from Figure 5, the course section relating to CNC technology can be obtained from supplier 1, 2 or 3 or from a combination of these suppliers. The course section relating to CAD/CAM can only be obtained from supplier 6.

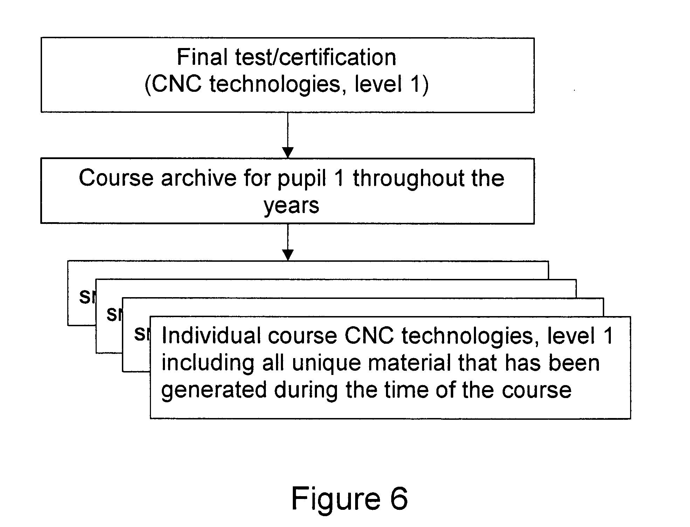

Figure 6 illustrates schematically a certifying process concerning pupil 1 from Figures 4 and 5. When pupil 1 has studied the course sections given in the course plan, it is time for a final examination/certification. When this step has been completed, i.e. when pupil 1 has shown sufficient competence, the individual course "CNC technology, level 1", including all unique material that has been generated over the duration of the course is stored in a course archive for pupil 1.

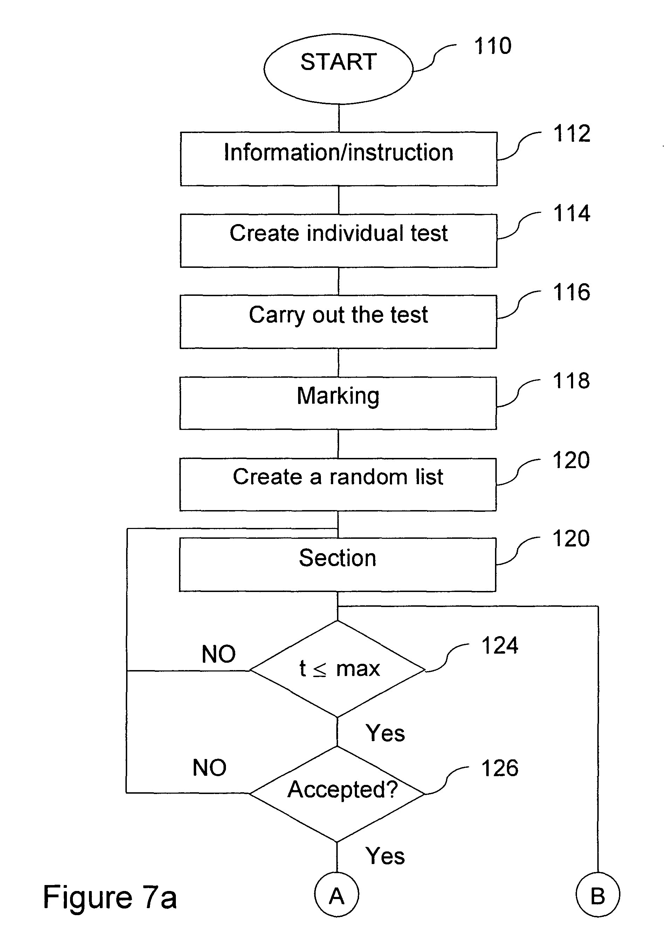

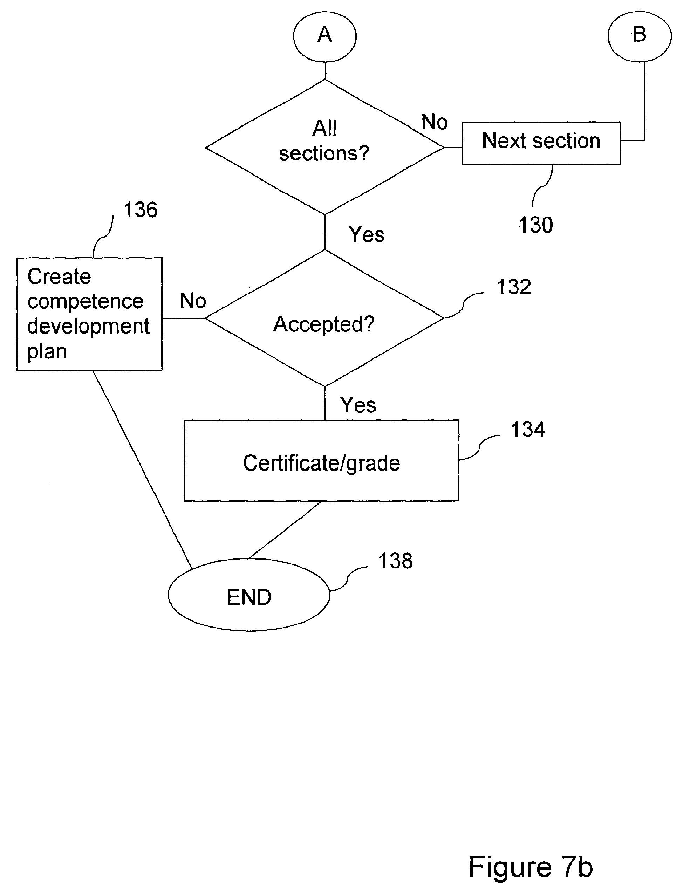

Figure 7 is a flowchart illustrating the validation part of the method for achieving quality ensured competence development in accordance with the present invention. The method starts at block 110. The method then continues at block 112 with the step in which an individual/student fetches information/instructions directly from the Internet, for instance. The method then continues at block 114 with the step in which an individual test is created by automatic copying. The method then continues at block 116 with the step in which the individual/student takes the test, i.e. answers the questions asked in the test. The method then continues at block 118 with the step of automatically marking the answers. The answers are presented in the form of a marking template which shows which questions have been answered correctly by the individual/the student and those which have been answered incorrectly. The marking template is the same as an individual study plan with respect to the theoretical questions. A unique feature of the present invention is that the assumptions can be integrated and a practical test carried out where the result is marked or graded together with the theoretical test. The method then continues at block 120 with the step of creating a random list in which the practical items are placed in a chronological order in accordance with the production process or the station system chosen for the test. All of the instructions, drawings, NC programs, etc., are now entered into the system with regard to each practical item, in the same way as that described under the competence development phase. The method then continues at block 122 with the step in which the individual/student carries out a section of the practical item in accordance with the random list. Certain practical tests will have a maximum time entered in the system, which means that if the task is not completed within the time that has been set, the individual (student) will not be accepted. This is sensed by the system automatically. In these cases, the method continues at block 124 with the step in which it is asked whether or not the task has been completed within the time set. If the answer to this question is negative, the step according to block 122 is repeated. On the other hand, if the answer to the question is positive, the method continues at block 126 with the step in which it is asked whether or not the individual/student has been accepted with regard to the practical test section concerned. A supervisor marks the test accepted or not accepted, e.g., through the medium of a handheld computer (laptop) or a stationary computer in the workshop/examination room. The system marks each completed item/section, by showing a green tick on the screen. If the answer is negative, the step according to block 122 is repeated. On the other hand, if the answer is positive, the method continues to block 128 in which it is asked whether or not all practical sections have been completed. If the answer to this question is negative, the method continues at block 130, in which the step of passing to the next section is carried out. The method then continues by repeating the steps according to blocks 124-128. On the other hand, if the answer to the question is positive, the method continues at block 132 with the step in which it is asked whether or not the individual/student has obtained a pass on the collected result. If the answer to this question is positive, the method continues with the step according to block 134, in which a certificate/grade is issued. On the other hand, if the answer to the question is negative, the method continues to the step according to block 136 in which an individual competence development plan is automatically created. The method is then terminated at block 138. Similarly, the method is terminated at block 138 after block 134.

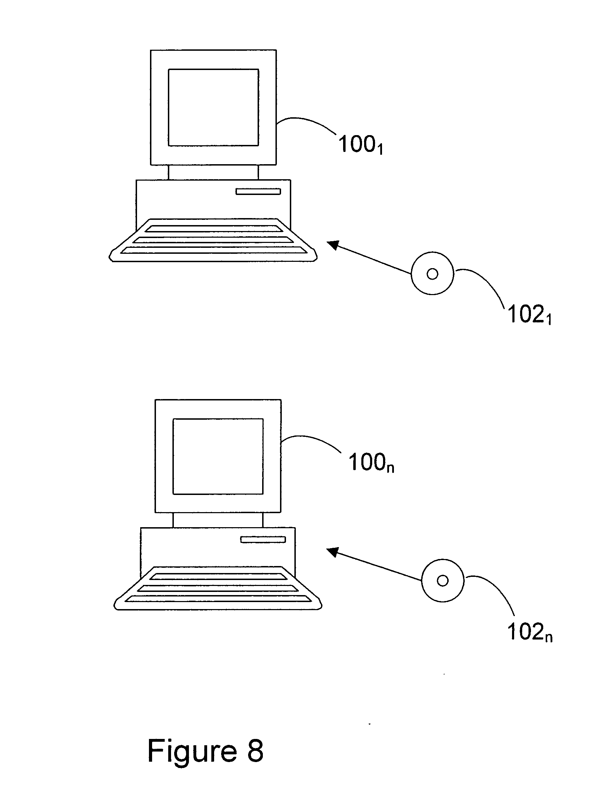

Figure 8 is a schematic illustration of some computer program products according to the present invention. The illustration shows n number of different digital computers 101₁, ..., 100ₙ, where n is an integer. The illustration also shows n number of computer program products 102₁, ..., 102ₙ in the form of CD ROM disks. The different computer program products 102₁, ..., 102ₙ can be downloaded directly into the internal memory of the n-number of computers 100₁, ..., 100ₙ. Each computer program product 102₁, ..., 102ₙ includes program software parts for carrying out some or all of the steps according to Figure 2, wherein the product/products 102₁, ..., 102ₙ are run on said computer (computers) 100₁, ..., 100ₙ. The computer program products may, for instance, have the form of diskettes, RAM disks, magnetic tapes, optomagnetic disks or some other suitable product form.

It will be understood that the invention is not restricted to the aforedescribed embodiments and that the person skilled in this art will be aware that many modifications are possible within the scope of the accompanying Claims.

## Claims

1. A control system for achieving quality ensured competence development, wherein said system is connected to a distributed computer network, wherein said system includes at least one first memory device connected to said distributed computer network and operable to store all course sections of different courses and an ideal time for each course section, at least one second memory device connected to said distributed computer network and operable to store all studied material affiliated with said course section, at least one third memory device connected to said distributed computer network and operable to store individual-adapted course plans, at least one control device connected to said distributed computer network and operable in calculating and indicating a planned completion date for each individual course plan with the aid of said ideal time for different course sections and the time spent by said individual on different course sections, and at least one fourth memory device connected to said distributed computer network and operable to store the course plans and course sections that have been completed with respect to each individual.

2. A control system for achieving quality ensured competence development in accordance with Claim 1, **characterised in that** each individual obtains access to said control system by means of a computer device connectable to said distributed computer network, and **in that** the control system also includes at least one recording device operable in recording the time spent for each course section by each individual.

3. A control system for achieving quality ensured competence development in accordance with any one of Claims 1-2, **characterised in that** the distributed computer network is the Internet or a Wide Area Network (WAN).

4. A control system for achieving quality ensured competence development in accordance with any one of Claims 1-3, **characterised in that** said at least one first memory device, said at least one third memory device and said at least one fourth memory device are comprised of at least one first server device; and **in that** said at least one second memory device is comprise of a second server device.

5. A control system for achieving quality ensured competence development in accordance with any one of Claims 2-4, **characterised in that** each computer device includes a reproduction device or display, where different cursors on the display indicate different statuses of a course section in respect of a given individual.

6. A control system for achieving quality ensured competence development in accordance with Claim 5, **characterised in that** a first cursor denotes that a course section has been completed, a second cursor denotes that a course section is ongoing, and a third cursor denotes that a course section has been commenced but not yet completed.

7. A control system for achieving quality ensured competence development in accordance with Claim 5 or Claim 6, **characterised in that** a fourth cursor functions to start and stop the recording of the time spent on a respective course section by the recording device.

8. A control system for achieving quality ensured competence development in accordance with any one of Claims 5-7, **characterised in that** a fifth cursor enables an individual to communicate with a teacher in writing.

9. A control system for achieving quality ensured competence development in accordance with any one of Claims 1-8, **characterised in that** access to the control system is obtained through the medium of a password and/or security codes.

10. A method of achieving quality ensured competence development with the aid of a control system for achieving quality ensured competence development, wherein the method includes the steps of
- choosing from a first memory device included in the control system and operable in storing all course sections for different courses and an ideal time for each course section, course sections that form an individual-adapted course plan, and storing said plan in a third memory device included in the control system;
- downloading study material affiliated with said chosen course sections from a second memory device included in the control system and operable in storing all study material;
- calculating and indicating a planned completion date for said course plan by means of a control device included in the control system and with the aid of said ideal time for different course sections and also with the aid of the time spent by said individual on different course sections; and
- when one or more course sections or the course plan has/have or has been completed, storing said course section/sections and/or course plan in a fourth memory device included in the control system.

11. A method of achieving quality ensured competence development in accordance with Claim 10, **characterised in that** each individual obtains access to said control system by means of a computer device which can be connected via a distributed computer network and which includes a reproduction device or display device, wherein said method also includes the steps in which
- a first cursor is shown on the display device to indicate that a course section has been completed;
- a second cursor is shown on the display device to indicate that a course section is ongoing; and
- a third cursor is shown to indicate that a course section is ongoing but not yet completed.

12. A method of achieving quality ensured competence development in accordance with Claim 11, **characterised in that** the control system includes at least one recording device operable in recording the time spent by each individual on different course sections, wherein the method further comprises the step of using a fourth cursor for starting and stopping recording of the time spent on a course section by the recording device.

13. A method of achieving quality ensured competence development in accordance with Claim 11 or Claim 12, **characterised in that** the method also comprises the step of using a fifth cursor displayed on the display device to enable an individual to communicate with a teacher in writing.

14. A method of achieving quality ensured competence development in accordance with any one of Claims 11-13, **characterised in that** the distributed computer network is the Internet or a Wide Area Network (WAN).

15. A method of achieving quality ensured competence development in accordance with any one of Claims 10-14, **characterised in that** the method also includes the step in which when study material has been revised in the second memory device, the revised study material is distributed to those individuals who have chosen the course section affiliated with said study material.

16. A method of achieving quality ensured competence development in accordance with any one of Claims 10-15, **characterised in that** access to the control system is obtained by entering a password and/or security codes.

17. At least one computer program product (102₁, ..., 102ₙ) that can be downloaded directly into the internal memory of at least one digital computer (100₁, ..., 100ₙ) includes software parts for carrying out the steps according to Claim 10 when said at least one product (102₁, ..., 102ₙ) is run on said at least one computer (100₁, ..., 100ₙ).
